# EUROPÄISCHE PATENTSCHRIFT

(11) **EP 0 549 580 B1**
(45) Veröffentlichungstag und Bekanntmachung des Hinweises auf die Patenterteilung: **31.08.1994**
(21) Anmeldenummer: 91906612.6
(22) Anmeldetag: 21.03.1991
(51) Int. Cl.: A47F 9/02

(54) **SERVICESCHALTER FÜR DIE ERFASSUNG, BUCHUNG UND/ODER ABRECHNUNG VON WAREN, BERECHTIGUNGSSCHEINEN UND DERGLEICHEN**
SERVICE DESK FOR THE ACQUISITION, BOOKING AND/OR SETTLEMENT OF GOODS, VOUCHERS AND THE LIKE
GUICHET POUR L'ENREGISTREMENT, LA RESERVATION ET/OU LE REGLEMENT D'ARTICLES, DE TITRES DE LEGITIMATION ET ANALOGUE

(30) Priorität: 21.09.1990 DE 9013392 U
(43) Veröffentlichungstag der Anmeldung: 07.07.1993
(73) Patentinhaber: Siemens Nixdorf Informationssysteme Aktiengesellschaft, 33102 Paderborn (DE)
(72) Erfinder: BAITZ, Günter, D-1000 Berlin 27 (DE); BURCHART, Joachim, D-4797 Schlangen (DE); GRAY, Rory, Crowthorn Berks RG11 7DX (GB); MERTZ, Stefan, D-8162 Schliersee (DE); SPORLEDER, Dirk, D-4794 Hövelhof (DE)
(86) Internationale Anmeldenummer: EP9100551
(87) Internationale Veröffentlichungsnummer: WO9204849

(56) Entgegenhaltungen:
- EP-A- 0 283 241
- DE-A- 3 308 872
- DE-C- 3 723 316
- GB-A- 2 211 786

## Beschreibung

Die Erfindung betrifft einen Serviceschalter der im Oberbegriff des Anspruchs 1 genannten Art.

Solche Schalter sind z.B. als Check-In Counter in Flughafenhallen bekannt und in der sogenannten Check-In Line in großer Zahl nebeneinander angeordnet. Es ist zu beobachten, daß besonders zu verkehrsschwachen Zeiten nur ein Teil der Check-In Counter mit Bedienungspersonen besetzt ist. Dort bilden sich dann lange Warteschlangen, während die unbesetzten Counter leerstehen.

Diese Situation führt zu Unzufriedenheit der Fluggäste. Ein großer Teil von ihnen reist häufig mit dem Flugzeug und und wäre daher ohne weiteres in der Lage, ohne fremde Hilfe die vor Antritt einer Flugreise notwendigen Formalitäten zu erledigen. Für die Fluggesellschaft ist die gegenwärtige Situation ebenfalls unbefriedigend, da den hohen Investitionen für die Counter und deren datentechnische Ausstattung nur ein geringer Benutzungsgrad gegenübersteht.

Ein ähnliches Problem tritt auf bei Warenerfassungs- und Abrechnungsplätzen für Verkaufsgeschäfte, sogenannten Check-Out-Plätzen. Solche Plätze sind z.B. aus Supermärkten bekannt, wo sie in der sogenannten Check-Out Line in großer Zahl nebeneinander angeordnet sind. Auch hier ist zu beobachten, daß besonders zu verkehrsschwachen Zeiten nur ein Teil der Check-Out-Plätze mit Bedienkräften besetzt ist. Dort bilden sich dann lange Warteschlangen, während die unbesetzten Plätze nicht genutzt werden können.

Auch hier wäre ein Großer Teil der Kunden, die häufig nur wenige Artikel abzurechnen haben, ohne weiteres in der Lage, ohne fremde Hilfe die Warenkennzeichnung, beispielsweise eine Strichcodemarkierung, zu erfassen und den Rechnungsbetrag mit Hilfe einer Kreditkarte unbar oder nach Erhalt eines Summenbeleges an einer zentralen Kasse bar zu entrichten. Hinsichtlich des Benutzungungsgrades der Check-Out-Plätze gelten für den Warenhausbetreiber hier dieselben Überlegungen wie für die Fluggesellschaften in dem oben geschilderten Fall.

In der DE-B-23 39 595 ist ein schußsicherer Bedienungsschalter beschrieben, bei dem eine Kundenseite und eine Bedienerseite durch eine schußsichere Glaswand getrennt sind, in der eine Durchreiche und unter der eine Drehscheibe mit einer Mulde angeordnet sind.

Der Erfindung liegt die Aufgabe zugrunde, unter Vermeidung der vorstehend genannten Nachteile einen Serviceschalter der eingangs genannten Art anzugeben, der wahlweise in bedienter Betriebsart oder im Selbstbedienungsbetrieb genutzt werden kann.

Diese Ausgabe wird durch die im Kennzeichen des Anspruchs 1 genannten Merkmale gelöst.

Der Bedienbereich ist in mindestens zwei Teile geteilt, wobei sich der erste Teil stets auf der Kundenseite des Serviceschalters befindet und der zweite Teil zwischen der Kundenseite und der Bedienerseite verstellt werden kann.

Vorteilhafterweise enthält dabei der erste Teil des Bedienbereichs wenigstens einen Leser für maschinenlesbare Daten, insbesondere einen Kartenleser zum Lesen von Identitätskarten, Scheckkarten und dergleichen sowie eine Eingabetastatur zur manuellen Eingabe von Daten. Der zweite Teil des Bedienbereiches ist bei einer bevorzugten Ausführungsform des erfindungsgemäßen Serviceschalters mit einem Datensichtgerät, einer Eingabevorrichtung für die manuelle Dateneingabe und einer Ausgabevorrichtung für Wertscheine, Berechtigungsscheine und Belege ausgestattet.

Damit ist es möglich, an dem Serviceschalter Buchungen vorzunehmen und dabei entstehende Kosten auch unbar zu bezahlen. Die notwendigen Daten für eine Buchung werden dabei mit Hilfe der im zweiten Teil des Bedienbereiches vorgesehenen Eingabevorrichtung einem Buchungssystem, im allgemeinen einer Datenverarbeitungsanlage mitgeteilt. Diese veranlaßt daraufhin die Ausgabe von Buchungsbelegen und Berechtigungsscheinen, wie z.B. eines Tickets oder einer Bordkarte. Der Kunde kann die Buchungskosten unbar mit einer Kreditkarte bezahlen, die er in den im ersten Teil des Bedienbereiches angeordneten Belegleser einführt. Die ebenfalls in diesem Teil des Bedienbereiches befindliche Eingabetastatur kann dabei von dem Kunden zur Eingabe seiner persönlichen Identifikationsnummer benutzt werden.

Ist der zweite Teil des Bedienbereiches des Buchungs- oder Serviceschalters dem Kunden zugewandt, kann dieser die Buchung selbst vornehmen. Ist sie hingegen der Bedienerseite zugewandt, werden die Buchungen von einer Bedienungsperson vorgenommen, die dem Kunden gegenüber auf der anderen Seite des Serviceschalters sitzt. Der Kunde hat dann keinen Zugriff zu den Buchungsmitteln, kann aber weiterhin Zahlungen mit einer Kreditkarte in der vorbeschriebenen Weise vornehmen.

Bei einer weiteren Ausführungsform des erfindungsgemäßen Serviceschalters ist im zweiten Teil des Bedienbereiches eine weitere Ausgabeöffnung vorgesehen, der z.B. nach Anforderung über die Dateneingabevorrichtung Gepäckanhänger, sogenannte Bag Tags, entnommen werden können.

Die Buchungsbelege können bereits vorgedruckt sein und auf Anforderung über die Dateneingabevorrichtung aus einem Vorratsbehälter der jeweiligen Ausgabeöffnung zugeführt werden. Ist einer Ausgabeöffnung aber ein Drucker zugeordnet, können auch buchungsspezifische Ausdrucke dem Kunden zur Verfügung gestellt werden.

Gemäß einem weiteren Merkmal der Erfindung kann auch im zweiten Teil des Bedienbereiches ein Leser für gedruckte maschinenlesbare Daten angeordnet sein. Mit diesem können z.B. die auf einem Flugticket aufgedruckten strichkodierten Ticket-Identifizierungsdaten gelesen werden. Das Buchungssystem kann dann die Ticketnummer der Buchung zuordnen, für die das Ticket an einem anderen Ort, z.B. in einem Reisebüro, ausgestellt wurde, und ohne weitere manuelle Dateneingaben beispielsweise eine Bordkarte erstellen.

Die Dateneingabevorrichtung ist im einfachsten Fall eine allgemein bekannte Computertastatur. In einer bevorzugten Ausführungsform des Serviceschalters ist sie aber als berührungsempfindliche Fläche vor dem Bildschirm ausgebildet. Letzterer wird dadurch zu einem sogenannten Touch Screen Terminal. Die Bedienung des Buchungsschalters wird dadurch insbesondere für den Kunden weiter vereinfacht. Er braucht bei seinen Eingaben nämlich nur mit dem Finger auf die auf dem Bildschirm dargestellten Informationen zu weisen, um eine Eingabe in das Buchungssystem vorzunehmen. Es ist aber auch möglich, frei programmierbare Tasten, sogenannte Soft-keys am Rande des Bildschirms anzuordnen, deren Funktion auf den Tasten jeweils benachbarten Bildschirmbereichen angezeigt wird.

Zweckmäßigerweise ist der zweite Teil des Bedienbereiches an einer aufrecht stehenden Säule angeordnet, wobei mindestens ein den zweiten Teil des Bedienbereiches tragender Abschnitt der Säule um eine lotrechte Achse drehbar sein kann. Dadurch wird die Verstellung des zweiten Bedienbereichteils von der Kunden- zur Bedienerseite des Serviceschalters und umgekehrt besonders erleichtert. Der drehbare Säulenteil kann dabei auf einem Drehkranz gelagert sein oder auf seiner Unterseite nahe am Außenrand seiner Bodenfläche Rollen oder Kugeln tragen, die bei der Drehung des drehbaren Säulenteils auf dessen Unterstützungsfläche abrollen. Zweckmäßigerweise ist zur Erhöhung der Bedienungssicherheit der zweite Teil des Bedienungsbereiches sowohl in der dem Bediener als auch in der dem Kunden zugewandten Position arretierbar. Die Arretierung kann auch mit Hilfe eines Schlosses erfolgen, das nur von der Bedienungsperson betätigbar ist, so daß die Stellung des zweiten Teils des Bedienbereiches von dem Kunden nicht verändert werden kann.

Bei einer bevorzugten weiteren Ausgestaltung der Erfindung ist mindestens ein Teilbereich des zweiten Teils des Bedienbereiches in Form eines flächigen geneigten Feldes ausgebildet, dessen oberer Rand zur Säulenachse hin versetzt ist. Die Bedienung wird durch die Neigung des Feldes vereinfacht. Ebenso kann der erste Teil des Bedienbereiches ein flächig geneigtes Feld sein, dessen Neigungswinkel im wesentlichen dem des Teilbereiches des zweiten Teils des Bedienbereiches entspricht. Die Bedienungsfreundlichkeit kann dabei noch dadurch gesteigert werden, daß die Felder beider Teilbereiche des Bedienbereiches einen stumpfen Winkel miteinander bilden, wenn der zweite Teil des Bedienbereiches dem Kunden zugewandt ist.

Bei einer bevorzugten Ausführungsform des Serviceschalters ist der erste Teil des Bedienbereiches feststehend. Da dieser Teil stets dem Kunden zugewandt ist und auch nicht bewegt werden muß, läßt sich diese Ausführungsform besonders preiswert herstellen.

Die vorstehenden Erläuterungen bezogen sich insbesondere auf eine Ausführungsform der Erfindung, bei der der Serviceschalter beispielsweise als Buchungsschalter zum Einchecken an Flughäfen benutzt werden kann. Für die Benutzung des erfindungsgemäßen Serviceschalters zur Erfassung und Abrechnung von Waren ist es zweckmäßig, wenn der erste Teil des Bedienbereiches des Serviceschalters eine im Zugriffsbereich der Kunden und einer Bedienungsperson liegende Warenerfassungseinrichtung enthält und der Bedienbereich einen ausschließlich der Bedienungsperson zugänglichen dritten Teil umfaßt. Der dritte Teil kann dabei eine Aufnahme für eine Kassenlade enthalten, die mit einer mit dem Serviceschalter verbundenen Datenverarbeitungseinrichtung koppelbar ist. Die Warenerfassungseinrichtung kann beispielsweise von einem optischen Scanner-Strichcodeleser gebildet sein.

Mit der vorstehend beschriebenen Ausführungsform ist es möglich, die von dem Kunden zusammengetragenen Waren wahlweise von dem Kunden selbst oder durch eine Bedienungsperson erfassen zu lassen. Der Rechnungsbetrag kann bar oder auch unbar bezahlt werden. Die notwendigen Daten für eine Abrechnung werden dabei mit Hilfe des im dritten Teil befindlichen Strichcodeleser und/oder der im zweiten Teil des Bedienbereiches vorgesehenen Eingabevorrichtung einem Abrechnungssystem, im allgemeinen einer mit dem Serviceschalter verbundenen Datenverarbeitungsanlage mitgeteilt. Diese veranlaßt daraufhin die Ausgabe eines Abrechnungsbeleges wie beispielsweise eines Kassenbons. Der Kunde kann den Rechnungsbetrag unbar mit einer Kreditkarte bezahlen, die er in den im ersten Teil des Bedienbereiches angeordneten Kartenleser einführt. Die ebenfalls in diesem Teil des Bedienbereiches befindliche Eingabetastatur kann dabei von dem Kunden zur Eingabe seiner persönlichen Identifikationsdaten benutzt werden.

Ist der zweite Teil des Bedienbereiches des Serviceschalters oder Abrechnungsplatzes dem Kunden zugewandt, kann dieser die Abrechnung selbst vornehmen. Ist sie hingegen der Bedienerseite zugewandt, wird die Abrechnung von einer Bedienungsperson vorgenommen. Der Kunde hat dann keinen Zugriff zu den Datenanzeige-, Ein- und Ausgabemitteln des zweiten Teiles, kann aber weiterhin Zahlungen mit einer Kreditkarte in der vorbeschriebenen Weise vornehmen.

In die Aufnahme für eine Kassenlade kann diese bei Bedarf eingesetzt werden. Dies hat den Vorteil, daß bei einem unbedienten Serviceschalter keine Kassenlade vorhanden zu sein braucht, die zu gewaltsamen Öffnungsversuchen einladen könnte. Wenn aber eine Kassenlade fest an dem Platz angeordnet ist, kann vorgesehen sein, daß der in die Selbstbedienungsstellung verschwenkte zweite Teil des Bedienbereiches die Kassenlade überdeckt und sie so unzugänglich macht. Durch die Verriegelung des zweiten Teiles des Bedienbereiches in dieser Stellung ist damit ein Zugang zur Kassenlade gesperrt.

Die Kassenlade kann sowohl als Schublade ausgebildet als auch mit einem Klappdeckel versehen sein. In jedem Falle ist die Kassenlade zweckmäßigerweise so angeordnet, daß ihre Öffnung von der Kundenseite abgewandt ist, um zu vermeiden, daß in räuberischer Absicht in die geöffnete Lade gegriffen werden kann.

Bei einer weiteren Ausführungsform der Erfindung kann der zweite Teil des Bedienbereiches höhenverstellbar und in seinem Neigungswinkel gegenüber der Senkrechten verschwenkbar sein. Dies hat den Vorteil, daß dieser Teil des Bedienbereiches sowohl für die im allgemeinen sitzende Bedienungsperson bei bedienter Betriebsart als auch für den stehenden Kunden bei der Selbstbedienungsbetriebsart ergonomisch richtig eingestellt werden kann.

An der Oberseite des zweiten Bedienteils kann ferner eine um ihre senkrechte Achse verschwenkbare Kundenanzeigevorrichtung angeordnet sein, die es gestattet, auch in der bedienten Betriebsart dem Kunden die Abrechnungsvorgänge bequem sichtbar zu machen.

Weitere Merkmale und Vorteile der Erfindung ergeben sich aus der folgenden Beschreibung, welche in Verbindung mit der beiliegenden Zeichnung die Erfindung anhand von Ausführungsbeispielen erläutert. Es zeigen:
- Figur 1: eine perspektivische Ansicht eines erfindungsgemäßen Buchungsschalters von der Kundenseite mit dem Kunden zugewandtem zweitem Bedienbereichsteil,
- Figur 2: eine perspektivische Ansicht wie in Figur 1, jedoch mit der Bedienungsperson zugewandtem zweitem Bedienbereichsteil,
- Figur 3: eine perspektivische Ansicht eines erfindungsgemäßen Warenerfassungs- und Abrechnungsplatzes von der Kundenseite mit dem Kunden zugewandtem zweitem Bedienbereichsteil,
- Figur 4: eine der Figur 3 entsprechende Ansicht mit der Bedienungsperson zugewandtem Bediensbereichsteil und
- Figur 5: eine der Figur 4 entsprechende Ansicht einer weiteren Ausführungsform eines Warenerfassung- und Abrechnungsplatzes, der in einem Warentransportband eingebaut ist.

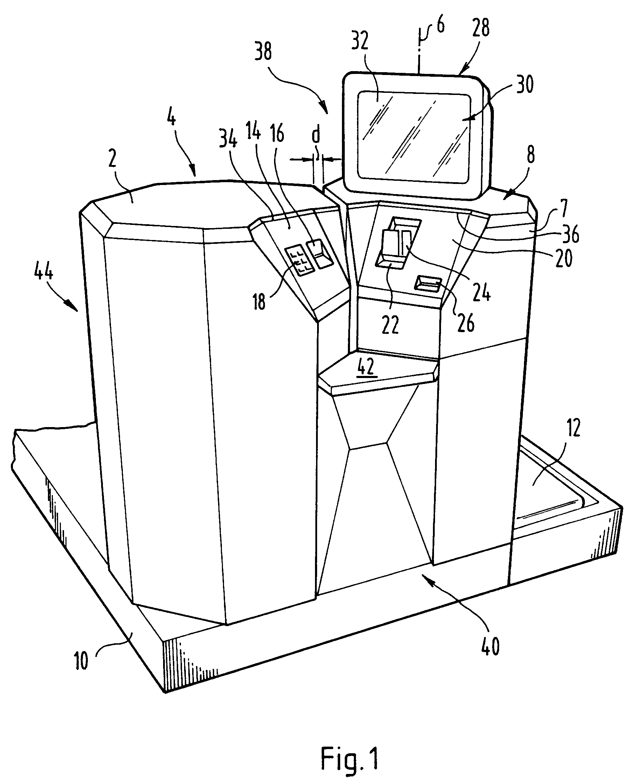

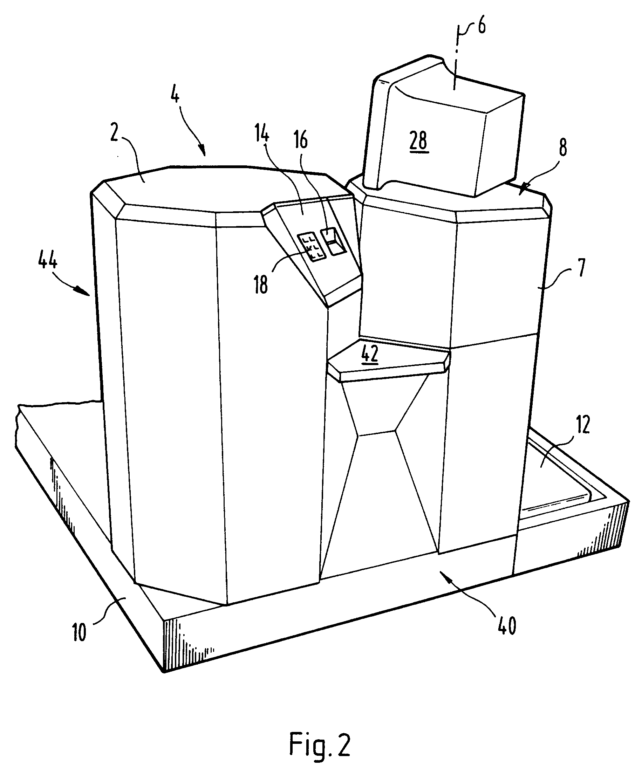

Die Figuren 1 und 2 zeigen einen Buchungsschalter der z.B. als Check-In Counter an Flughäfen bestimmt ist. Der Buchungsschalter besteht im wesentlichen aus einem als achteckige Säule 2 ausgebildeten feststehenden Schalterteil 4 und einem zweiten Schalterteil in Form einer aufrecht stehenden zweiten achteckigen Säule 8 deren oberer Abschnitt 7 um die vertikale Säulenlängsachse 6 drehbar ist. Beide Säulen 2, 8 sind auf einem Podest 10 nebeneinanderstehend angeordnet. Der Säule 8 benachbart befindet sich neben dem Podest 10 ein Gepäckförderband 12, dem eine nicht dargestellte Gepäckwaage zugeordnet sein kann.

Die feststehende Säule 2 weist in ihrem oberen Drittel eine erste Bedienfläche 14 mit einem Kartenleser 16 und einer Eingabetastatur 18 auf. Der drehbare Säulenabschnitt 7 hat ebenfalls eine Bedienfläche, die mit 20 bezeichnet ist. Diese enthält eine erste Ausgabeöffnung 22 für die Ausgabe von Wertscheinen und dergleichen, eine zweite Ausgabeöffnung 24 für Gepäckanhänger (Bag Tags) und einen Strichkodeleser 26. Auf der Säule 8 ist ein Datensichtgerät 28 angeordnet mit einer Dateneingabevorrichtung 30, die als berührungsempfindliche Fläche 32 ausgestaltet ist. Die Bedienfläche 14, 20 sind um den selben Neigungswinkel so gegen die Außenfläche der jeweiligen Säule 2, 8 geneigt, daß ihre jeweilige Oberkante 34, 36 zum Säuleninneren hin versetzt ist. Die Bedienflächen 14, 20, das Datensichtgerät 28 und die Dateneingabevorrichtung 30 bilden zusammen den Bedienbereich 38. Auf der Kundenseite 40 des Buchungsschalters befindet sich unterhalb des Bedienbereichs eine Ablage 42 für Handgepäck.

Während Figur 1 den Buchungsschalter in einer Einstellung für den Selbstbedienungsbetrieb mit zur Kundenseite 40 weisendem Bedienbereich 38 zeigt, ist in Figur 2 der Buchungsschalter für bediente Betriebsart eingestellt. In dieser Einstellung weist nur die den ersten Bedienbereichsteil darstellende Fläche 14 zur Kundenseite, während der aus der zweiten Bedienfläche 20, dem Datensichtgerät 28 und der Eingabevorrichtung 30 bestehende zweite Bedienbereichsteil zur Bedienerseite 44 gedreht ist. In beiden Einstellungen stehen die beiden Säulen 2, 8 mit einer ihrer Außenflächen parallel zueinander. Sie sind um das Maß d zueinander beabstandet, so daß bei einer Drehung des drehbaren Säulenabschnittes 7 dessen Kanten die feststehende Säule 2 gerade nicht berühren.

In der bedienten Betriebsart (Figur 2) wird ein Kunde der Bedienungsperson seine Wünsche vortragen und ggf. sein Ticket zur Bearbeitung übergeben. Der Kunde wird dann gebeten, sein Gepäck auf das Gepäckförderband 12 zu stellen. Über den zweiten Bedienbereichsteil nimmt die Bedienkraft einen Dialog mit dem Buchungssystem auf, händigt dem Kunden sein Ticket und evtl. eine Bordkarte und einen Gepäckschein aus, versieht das Gepäck mit Gepäckanhängern und nennt dem Kunden einen Preis für die erbrachten Leistungen. Will der Kunde den Betrag unbar bezahlen, führt er eine Kreditkarte in den Kartenleser 16 ein und gibt auf der Tastatur seine persönliche Identifikationsnummer ein. Damit ist der Buchungsvorgang beendet.

Im Selbstbedienungsbetrieb (Figur 1) gibt der Kunde seine Buchungswünsche, wie z.B. den Erwerb eines Tickets über die Dateneingabevorrichtung 30 in das Buchungssystem ein, wobei er durch entsprechende Anzeigen und Dialogfragen von dem Datensichtgerät 28 unterstützt wird. Nach Abschluß der Buchung wird ihm der Preis angezeigt, den er in der oben beschriebenen Weise bezahlen kann. Darauf wird ihm ein Ticket ausgegeben sowie gegebenenfalls eine Bordkarte, ein Gepäckanhänger und eine gedruckte Quittung über den gezahlten Betrag.

Hat der Kunde bereits ein Ticket und möchte nur "einchecken"_{,} d.h. sein Gepäck aufgeben und eine Bordkarte erwerben, führt er sein Ticket so in den Leser 26 ein, daß die auf dem Ticket befindliche Strichcodemarkierung von dem Gerät erfaßt werden kann. Er erhält dann eine Bordkarte und Gepäckanhänger für den gebuchten Flug.

Der erfindungsgemäße Buchungsschalter ist nicht nur für den Einsatz auf Flughäfen geeignet, sondern kann allgemein bei den Betreibern öffentlicher Verkehrsmittel, aber auch von Veranstaltern von Messen und Ausstellungen oder Sportveranstaltungen eingesetzt werden. Auch kann der Buchungsschalter im Bankwesen vorteilhaft eingesetzt werden.

In einer vorteilhaften Weiterbildung ist vorzugsweise an der Oberseite des zweiten Bedienteils eine um ihre senkrechte Achse verschwenkbare Kundenanzeigevorrichtung angeordnet, die es gestattet, auch in der bedienten Betriebsart dem Kunden die Kassiervorgänge sichtbar zu machen.

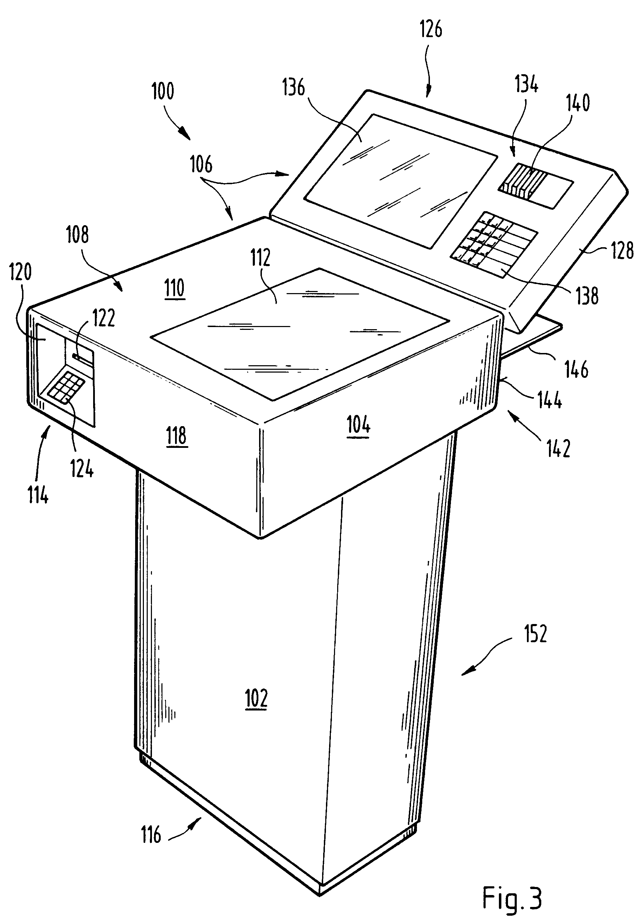

Ein weiteres Ausführungsbeispiel der Erfindung in Form eines Warenerfassungs- und Abrechnungsplatzes, eines sogenannten Check-Out-Platzes ist in den Figuren 3 bis 5 dargestellt und im folgenden näher beschrieben.

In Figur 3 ist ein Check-Out-Platz 100 in einer perspektivischen Ansicht dargestellt. Dieser hat ein säulenförmiges Unterteil 102, in welchem ein nicht dargestellter Rechner angeordnet ist. Auf dem Unterteil 102 befindet sich ein Oberteil 104 mit einem in 3 Teile aufgeteilten Bedienbereich 106.

Ein erster Bedienbereichsteil 108 umfaßt eine Warenerfassungsfläche 110, in die ein Warenerfassungsfenster 112 eingelassen ist. Unter diesem befindet sich ein nicht dargestellter optischer Scanner-Strichcodeleser zum Erfassen von maschinenlesbaren, an den Waren angebrachten Markierungen. Dieser Teil ist sowohl für den Kunden als auch für eine Bedienungsperson erreichbar.

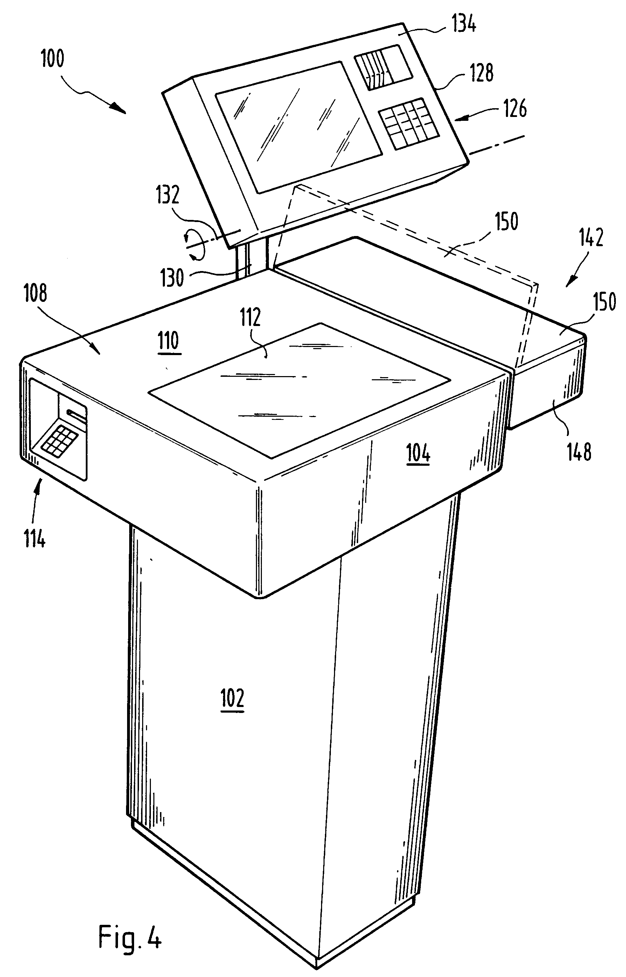

Ein zweiter Bedienbereichsteil 126 umfaßt ein Gehäuse 128, das auf einer - in nicht dargestellter Weise an der in Figur 4 linken Seite des Unterteils 102 angebrachten - Säule 130 befestigt ist. Die Säule 130 trägt das Gehäuse 128 auf dessen in Figur 4 linker Seite. Das Gehäuse 128 ist am oberen Ende der Säule 130 um eine zur Warenerfassungsfläche 110 parallele Schwenkachse 132 gegenüber der Senkrechten verschwenkbar gehalten. Ferner ist das Gehäuse 128 um die Längsachse der Säule 130 derart verschwenkbar, daß seine vordere Unterkante wahlweise im wesentlichen parallel oder senkrecht zur Frontseite 118 des Oberteils 104 einstellbar ist. Die Säule 130 ist in ihrer freien Länge veränderbar, so daß die Höhenlage des Gehäuses 128 gegenüber der Warenerfassungsfläche 110 verstellt werden kann.

Auf der Vorderseite 134 des Gehäuses 128 befindet sich ein Bildschirm 136 eines Datensichtgerätes, eine Dateneingabevorrichtung 138 und eine Ausgabeöffnung 140 für Abrechnungsbelege (sog. Kassenbon).

Der dritte Bedienbereichsteil 142 befindet sich auf der Rückseite 144 des Oberteils 104. An der Rückseite 144 ist eine plattenförmige, im wesentlichen senkrecht von dieser abstehende Aufnahmevorrichtung 146 für eine Kassenlade 148 angeordnet. Letztere wird beim Aufsetzen auf die Aufnahmevorrichtung 146 mit dieser mechanisch verriegelt und elektrisch mit dem im Unterteil 102 befindlichen Rechner verbunden.

Der erste Bedienbereichsteil umfaßt ferner ein Feld 114, das auf der Kundenseite 116 des Check-Out-Platzes 100 an der Frontseite 118 des Oberteils 104 angeordnet ist. In die Frontseite 118 ist eine Mulde 120 eingelassen, in der sich ein Kartenleser 122 und eine Eingabetastatur 124 befinden. Das Feld 114 kann entfallen, wenn aus organisatorischen Gründen Unbarzahlung am Check-Out-Platz nicht gewünscht wird.

In Figur 3 ist der Check-Out-Platz 100 in einer Einstellung für Selbstbedienungsbetrieb dargestellt. Dazu ist der zweite Bedienbereichsteil 126 so eingestellt, daß die vordere Unterkante des Gehäuses 128 unmittelbar an der Oberkante der Rückseite 144 des Oberteils 104 und parallel zu dieser zu liegen kommt. Das Gehäuse 128 ist weit zurückgeneigt, so daß eine auf der Kundenseite 116 stehende Person den Bildschirm 136 voll im Blick hat und die Dateneingabevorrichtung 138 und die Ausgabeöffnung 140 gut mit den Händen erreichen kann.

Der Warenerfassungs- und -abrechnungsvorgang läuft nun wie folgt ab: Der Kunde führt mit der Hand die eingekauften Artikel so über das Warenerfassungsfenster 112, daß die an den Waren angebrachten Warenkennzeichnungen von dem darunter befindlichen Strichcodeleser erfaßt werden. Zur Kontrolle des Erfassungsvorganges werden die Daten der erfaßten Artikel, wie Bezeichnung und Preis, auf dem Bildschirm 136 angezeigt. Nachdem der letzte Artikel erfaßt ist, betätigt der Kunde eine als "Ende-Taste" gekennzeichnete Taste auf der Dateneingabevorrichtung 138. Darauf wird aus der Ausgabeöffnung 140 ein Abrechnungsbeleg, etwa ein Kassenbon, ausgegeben, dem der Rechnungsbetrag zu entnehmen ist. Je nach Organisationsform des Warenhauses kann der Kunde den Rechnungsbetrag an einer Zahlkasse begleichen, an der er auf seinem Weg zum Ausgang zwangsläufig vorbeigeführt wird, oder er kann die Rechnung mit einer Kreditkarte direkt am Check-Out-Platz 100 bezahlen. Zu diesem Zweck führt er seine Kreditkarte in den Kartenleser 122 ein und gibt auf der Eingabetastatur 124 seine persönliche Identifikationsnummer ein. Nach beendetem Abbuchungsvorgang erhält der Kunde aus der Ausgabeöffnung 140 einen Quittungsbeleg.

In Figur 4 ist der Check-Out-Platz 100 in einer Einstellung für bediente Betriebsart dargestellt. Dazu wird der zweite Bedienbereichsteil 126 so um die Längsachse der Säule 130 verschwenkt, daß die vordere Unterkante des Gehäuses 128 senkrecht zur Oberkante der Rückseite 144 des Oberteils 104 steht. Damit wird die Aufnahmevorrichtung 146 freigegeben, so daß auf sie die Kassenlade 148 aufgesetzt und mit ihr verriegelt werden kann. Gleichzeitig wird die Kassenlade elektrisch mit dem im Unterteil 102 befindlichen Rechner verbunden, der nun in bekannter Weise das Öffnen des Kassenladendeckels 150 in Abhängigkeit von den Kassiervorgängen steuert.

Das Gehäuse 128 ist in der vorbeschriebenen Stellung so weit zur Seite verschwenkt, daß es sich vollständig neben dem Oberteil 104 befindet. Dadurch kann der Kassenladendeckel 150 voll aufklappen, wie dies in Figur 4 gestrichelt gezeigt ist. Die Neigung des Gehäuses 128 und damit des zweiten Bedienbereichsteils 126 und dessen Höhe werden nun den ergonomischen Bedürfnissen der auf der Bedienerseite 152 sitzenden Bedienperson entsprechend eingestellt.

Der Warenerfassungs- und -abrechnungsvorgang läuft im bedienten Betrieb wie folgt ab: Entweder der Kunde oder die Bedienperson führt mit der Hand die eingekauften Artikel wie oben beschrieben über das Warenerfassungsfenster 112. Die Bedienperson beendet den Erfassungsvorgang wie oben beschrieben und übergibt dem Kunden den Abrechnungsbeleg. Will der Kunde bar bezahlen, öffnet die Bedienperson in an sich bekannter Weise durch Betätigen einer Taste auf der Dateneingabevorrichtung 138 die Kassenlade 150 für den Kassier- und Restgeld-Rückgabevorgang. Bei unbarer Zahlungsweise verfährt der Kunde wie bei der Selbstbedienungsbetriebsart.

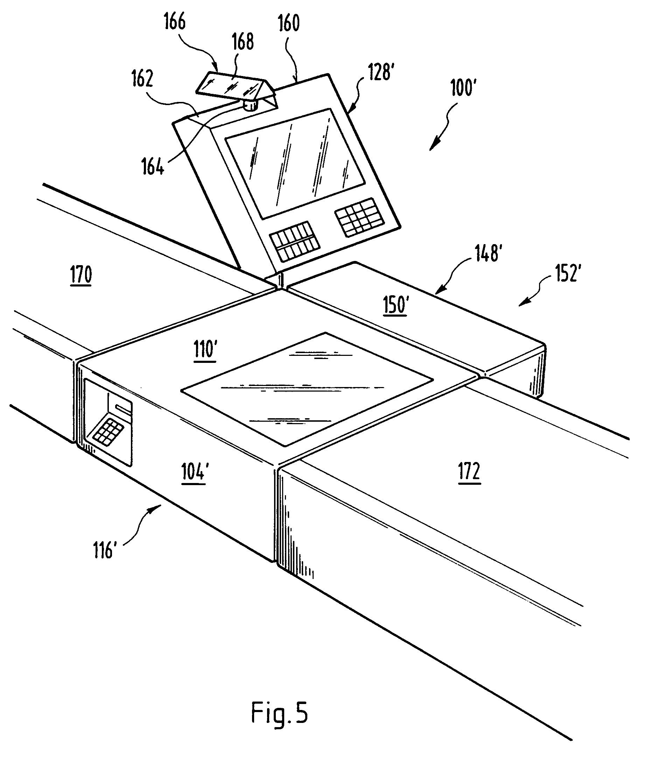

In Figur 5 ist ein weiteres Ausführungsbeispoiel des erfindungsgemäßen Check-Out-Platzes gezeigt. Bei diesem befindet sich auf der Oberseite 160 des Gehäuses 128' ein Ausschnitt 162. Aus diesem ragt ein Standrohr 164, auf dessen oberem Ende ein Gehäuse 166 mit dreieckförmigem Querschnitt befestigt ist. Letzteres beinhaltet eine Kundenanzeige 168.

Die Kundenanzeige 168 wird in der in Figur 5 gezeigten Einstellung für bediente Betriebsart des Check-Out-Platzes 100' zur Kundenseite 116' gedreht. In der Selbstbedienungsbetriebsart wird die Kundenanzeige 168 um 90° gegenüber der dargestellten Stellung verdreht, so daß sich das Gehäuse 166 in den Ausschnitt 162 einfügt und so das Gehäuse 128' zu voller Quaderform ergänzt.

Figur 5 ist ferner zu entnehmen, daß das Oberteil 104' des Check-Out-Platzes 100' ein Tiefenmaß aufweist, das der Breite von handelsüblichen Warentransportbändern 170, 172 entspricht. Lediglich die Kassenlade 148' ist auf der Bedienerseite 152' außerhalb der von den Transportbändern gebildeten Flucht angeordnet. Der Kassenladendeckel 150, die Warenerfassungsfläche 110' und die Transportbänder 170, 172 bilden dabei eine durchgehende Oberfläche.

Bei der Warenerfassung greift die Bedienperson die über das Zuförderband 170 herangeführten Artikel und schiebt sie über die Warenerfassungsfläche 110' auf das Abförderband 172. Sie kann dabei ihre Hand und ihren Unterarm auf dem Deckel 150 der Kassenlade 148' abstützen, wodurch ein ermüdungsarmes Arbeiten gewährleistet ist.

Bei allen Ausführungsformen kann vorgesehen sein, daß der verstellbare Bedienbereichsteil in seiner jeweiligen Stellung mittels eines Schlosses arretierbar ist und somit nur von einer autorisierten Person verstellt werden kann. Dies ist z.B. dann sinnvoll, wenn im Selbstbedienbetrieb durch den zweiten Bedienbereichteil der Zugriff zur Kassenlade versperrt wird.

## Patentansprüche

1. Serviceschalter für die Erfassung, Buchung und/oder Abrechnung von Waren, Berechtigungsscheinen und dergleichen mit einem mindestens eine Datenanzeigevorrichtung, eine Dateneingabevorrichtung und eine Ausgabevorrichtung für Wertscheine, Belege und dergleichen enthaltenden Bedienbereich, dadurch **gekennzeichnet,** daß der Bedienbereich mindestens zwei Teile (14; 20, 28; 108; 126) umfaßt, von denen ein erster Teil (14; 108) sich stets auf der Kundenseite des Serviceschalters befindet und mindestens einen Leser für maschinenlesbare Daten, insbesondere Kartenleser (16; 122) sowie eine Eingabetastatur (18; 124) zur manuellen Eingabe von Daten enthält, und von denen ein zweiter Teil (20, 28; 126) zwischen der Kundenseite und der Bedienerseite des Serviceschalters verstellbar ist und mindestens ein Datensichtgerät (128; 136), eine Dateneingabevorrichtung (30; 138) für die manuelle Eingabe von Daten und mindestens eine Ausgabeöffnung (22; 140) insbesondere für Wertscheine und Belege enthält.

2. Serviceschalter nach Anspruch 1, dadurch **gekennzeichnet**, daß mindestens einer der Ausgabeöffnungen (22, 24; 140) ein Drucker zugeordnet ist.

3. Serviceschalter nach Anspruch 1 oder 2, dadurch **gekennzeichnet**, daß die Dateneingabevorrichtung des zweiten Teils (30) als berührungsempfindliche Fläche (32) vor dem Bildschirm des Datensichtgerätes (28) ausgebildet ist.

4. Serviceschalter nach einem der Ansprüche 1 bis 3, dadurch **gekennzeichnet**, daß der zweite Teil (20, 28) des Bedienbereichs (38) einen Leser (26) für maschinenlesbare Daten enthält.

5. Serviceschalter nach einem der Ansprüche 1 bis 4, dadurch **gekennzeichnet**, daß der zweite Teil (20, 28; 126) des Bedienbereichs (38, 106) an einer aufrechtstehenden Säule (8; 130) angeordnet ist.

6. Serviceschalter nach Anspruch 5, dadurch **gekennzeichnet**, daß mindestens ein den zweiten Teil (20, 28; 126) des Bedienbereichs (38; 106) tragender Abschnitt (7) der Säule (8, 130) um eine lotrechte Achse (6) drehbar ist.

7. Serviceschalter nach Anspruch 5 oder 6, dadurch **gekennzeichnet**, daß mindestens ein Teilbereich (20) des zweiten Teils (20, 28; 126) des Bedienbereichs (38; 106) in Form eines geneigten flächigen Feldes ausgebildet ist, dessen oberer Rand (36) zur Säulenachse hin versetzt ist.

8. Serviceschalter nach einem der Ansprüche 1 bis 7, dadurch **gekennzeichnet**, daß der erste Teil (14; 108) des Bedienbereichs (38; 106) feststehend ist.

9. Serviceschalter nach Anspruch 7 und 8, dadurch **gekennzeichnet,** daß der erste Teil (14) des Bedienbereichs (38) ein flächiges geneigtes Feld ist, dessen Neigungswinkel im wesentlichen dem des Teilbereichs (20) des zweiten Teils (20, 28) des Bedienbereichs (38) entspricht.

10. Serviceschalter nach Anspruch 9, dadurch **gekennzeichnet**, daß die Felder beider Teile (14; 20, 28) des Bedienbereichs (38) einen stumpfen Winkel miteinander bilden, wenn der zweite Teil (20, 28) des Bedienbereichs (38) dem Kunden zugewandt ist.

11. Serviceschalter nach einem der Ansprüche 1 bis 10, dadurch **gekennzeichnet,** daß der zweite Teil (20, 28; 126) des Bedienbereichs (38; 106) in der der Bedienperson und der dem Kunden zugewandten Position arretierbar ist.

12. Serviceschalter nach einem der Ansprüche 1 bis 11, dadurch **gekennzeichnet**, daß der erste Teil (108) des Bedienbereichs (106) eine im Zugriffsbereich des Kunden und der Bedienperson angeordnete Warenerfassungseinrichtung (112) enthält und daß der Bedienbereich (106) einen ausschließlich der Bedienperson zugänglichen dritten Teil (142) umfaßt.

13. Serviceschalter nach Anspruch 12, dadurch **gekennzeichnet**, daß der dritte Teil (142) eine Aufnahme für eine Kassenlade (150) enthält, die mit einer Datenverarbeitungseinrichtung koppelbar ist.

14. Serviceschalter nach Anspruch 13, dadurch **gekennzeichnet**, daß der verstellbare zweite Teil (126) in seiner dem Kunden zugewandten Stellung die Aufnahme (146) für die Kassenlade (150) überdeckt.

15. Serviceschalter nach einem der Ansprüche 12 bis 14, dadurch **gekennzeichnet**, daß die Warenerfassungseinrichtung eine Code-Scanner umfaßt.

16. Serviceschalter nach einem der Ansprüche 1 bis 15, dadurch **gekennzeichnet**, daß an dem zweiten Teil (126) eine separat von diesem in ihrer Position verstellbare Kundenanzeige (166) angeordnet ist.

## Claims

1. Service desk for the registration, booking and/or payment of goods, vouchers and the like, having a service section including at least a data display device, a data input device and an output device for coupons, receipts and the like, characterized in that the service section comprises at least two parts (14; 20, 28; 108; 126), of which a first part (14; 108) is always on the customer's side of the service desk and includes at least one reader for machine-readable data, in particular a card reader (16; 122) as well as an input keyboard (18; 124) for the manual input of data, and of which a second part (20, 28; 126) can be moved between the customer's side and the operator's side of the service desk and includes at least a visual display unit (128; 136), a data input device (30; 138) for the manual input of data and at least one output opening (22; 140) in particular for coupons and receipts.

2. Service desk according to Claim 1, characterized in that at least one of the output openings (22, 24; 140) is assigned a printer.

3. Service desk according to Claim 1 or 2, characterized in that the data input device of the second part (30) is designed as a touch-sensitive area (32) in front of the screen of the visual display unit (28).

4. Service desk according to one of Claims 1 to 3, characterized in that the second part (20, 28) of the service section (38) includes a reader (26) for machine-readable data.

5. Service desk according to one of Claims 1 to 4, characterized in that the second part (20, 28; 126) of the service section (38, 106) is arranged on an upright column (8; 130)

6. Service desk according to Claim 5, characterized in that at least one section (7) of the column (8, 130), bearing the second part (20, 28; 126) of the service section (38; 106), is rotatable about a vertical axis (6).

7. Service desk according to Claim 5 or 6, characterized in that at least one portion (20) of the second part (20, 28; 126) of the service section (38; 106) is designed in the form of an inclined sheet-like panel, the upper edge (36) of which is offset towards the column axis.

8. Service desk according to one of Claims 1 to 7, characterized in that the first part (14; 108) of the service section (38; 106) is fixed.

9. Service desk according to Claims 7 and 8, characterized in that the first part (14) of the service section (38) is a sheet-like inclined panel, the angle of inclination of which corresponds essentially to that of the portion (20) of the second part (20, 28) of the service section (38).

10. Service desk according to Claim 9, characterized in that the panels of the two parts (14; 20, 28) of the service section (38) form an obtuse angle with each other when the second part (20, 28) of the service section (38) is facing the customer.

11. Service desk according to one of Claims 1 to 10, characterized in that the second part (20, 28; 126) of the service section (38; 106) can be locked in the position facing the operator and the position facing the customer.

12. Service desk according to one of Claims 1 to 11, characterized in that the first part (108) of the service section (106) includes a goods registration device (112) arranged in the range of access of the customer and the operator and in that the service section (106) comprises a third part (142) which is exclusively accessible to the operator.

13. Service desk according to Claim 12, characterized in that the third part (142) includes a receptacle for a cash drawer (150), which can be coupled to a data processing device.

14. Service desk according to Claim 13, characterized in that, in its position facing the customer, the movable second part (126) covers over the receptacle (146) for the cash drawer (150).

15. Service desk according to one of Claims 12 to 14, characterized in that the goods registration device comprises a code scanner.

16. Service desk according to one of Claims 1 to 15, characterized in that on the second part (126) there is arranged a customer display (166) which can be moved in its position separately from the said part.

## Revendications

1. Guichet pour l'enregistrement, la réservation et/ou le paiement de marchandises, de titres et analogues, comportant une zone de service ayant au moins un dispositif d'affichage de données, un dispositif d'entrée de données et un dispositif de sortie pour des billets de banque, des documents et analogues, caractérisé par le fait que la zone de service comprend au moins deux parties (14; 20, 28; 108; 126), dont une première (14; 108) se situe en permanence du côté client du guichet, et au moins un lecteur pour des données lisibles en machine, notamment un lecteur de cartes (16; 122) ainsi qu'un clavier d'entrée (18; 124) pour l'introduction manuelle de données, et dont une deuxième partie (20, 28; 126) peut être déplacée entre le côté client et le côté opérateur du guichet, et au moins un appareil de visualisation de données (128; 136), un dispositif d'entrée de données (30; 138) pour l'introduction manuelle de données et au moins une ouverture de sortie (22; 140) notamment pour des billets de banque et des documents.

2. Guichet suivant la revendication 1, caractérisé par le fait qu'une imprimante est associée à au moins l'une des ouvertures de sortie (22, 24; 140).

3. Guichet suivant la revendication 1 ou 2, caractérisé par le fait que le dispositif d'entrée de données de la deuxième partie (30) est réalisé sous la forme d'une surface tactile (32) en avant de l'écran de l'appareil de visualisation de données (28).

4. Guichet suivant l'une des revendications 1 à 3, caractérisé par le fait que la deuxième partie (20, 28) de la zone de service (38) comporte un lecteur (26) pour des données lisibles en machine.

5. Guichet suivant l'une des revendications 1 à 4, caractérisé par le fait que la deuxième partie (20, 28; 126) de la zone de service (38, 106) est disposée sur une colonne verticale (8; 130).

6. Guichet suivant la revendication 5, caractérisé par le fait qu'au moins un tronçon (7) de la colonne (8, 130), qui porte la deuxième partie (20, 28; 126) de la zone de service (38; 106), peut tourner autour d'un axe vertical (6).

7. Guichet suivant la revendication 5 ou 6, caractérisé par le fait qu'au moins une zone partielle (20) de la deuxième partie (20, 28; 126) de la zone de service (38; 106) est agencée sous la forme d'un panneau incliné d'une certaine étendue, dont le bord supérieur (36) est décalé en direction de l'axe de la colonne.

8. Guichet suivant l'une des revendications 1 à 7, caractérisé par le fait que la première partie (14; 108) de la zone de service (38; 106) est fixe.

9. Guichet suivant les revendications 7 et 8, caractérisé par le fait que la première partie (14) de la zone de service (38) est une zone inclinée d'une certaine étendue, dont l'angle d'inclinaison correspond sensiblement à celui de la zone partielle (20) de la deuxième partie (20, 28) de la zone de service (38).

10. Guichet suivant la revendication 9, caractérisé par le fait que les panneaux des deux parties (14; 20, 28) de la zone de service (38) font un angle obtus lorsque la deuxième partie (20, 28) de la zone de service (38) est tournée vers le client.

11. Guichet suivant l'une des revendications 1 à 10, caractérisé par le fait que la deuxième partie (20, 28; 126) de la zone de service (38; 106) peut être bloquée dans la position tournée vers l'opérateur et dans la position tournée vers le client.

12. Guichet suivant l'une des revendications 1 à 11, caractérisé par le fait que la première partie (108) de la zone de service (106) comporte un dispositif de détection de marchandises (112), qui est disposé dans la zone à laquelle ont accès le client et l'opérateur, et que la zone de service (106) comprend une troisième partie (142) accessible exclusivement à l'opérateur.

13. Guichet suivant la revendication 12, caractérisé par le fait que la troisième partie (142) comporte un logement pour un tiroir-caisse (150), qui peut être couplé à un dispositif de traitement de données.

14. Guichet suivant la revendication 13, caractérisé par le fait que, dans sa position tournée vers le client, la deuxième partie mobile (126) recouvre le logement (146) pour le tiroir-caisse (150).

15. Guichet suivant l'une des revendications 12 à 14, caractérisé par le fait que le dispositif de détection de marchandises comprend un scanner à code.

16. Guichet suivant l'une des revendications 1 à 15, caractérisé par le fait que sur la deuxième partie (126) est disposé un dispositif (166) d'affichage pour le client, qui est déplaçable séparément de cette partie.
